# FASCICULE DE BREVET EUROPEEN

(11) **EP 0 776 117 B1**
(45) Date de publication et mention de la délivrance du brevet: **13.01.1999**
(21) Numéro de dépôt: 96402527.4
(22) Date de dépôt: 22.11.1996
(51) Int. Cl.: H04M 1/74, H04M 3/18

(54) **Dispositif de protection d'une installation téléphonique contre la foudre**
Überspannungsschutzvorrichtung für eine Fernsprecheinrichtung
Surge protection device for a telephone installation

(30) Priorité: 23.11.1995 FR 9513966
(43) Date de publication de la demande: 28.05.1997
(73) Titulaire: FRANCE TELECOM, 75015 Paris (FR); Rousseaux Electronique Informatique (S.A.R.L.): REI, 93800 Epinay s/Seine (FR)
(72) Inventeur: Houze, Patrice, Cabinet Ballot Schmit, 94230 Cachan (FR); Rousseaux, Jean-Claude, 94230 Cachan (FR)
(74) Mandataire: Schmit, Christian Norbert Marie

(56) Documents cités:
- US-A- 4 980 911
- US-A- 5 245 654

## Description

La présente invention se rapporte aux dispositifs qui permettent de protéger contre la foudre les installations téléphoniques ainsi que les lignes téléphoniques auxquelles ces installations sont raccordées, et même éventuellement les installations distinctes, tel qu'un autocommutateur, connectées à l'autre extrémité de cette ligne téléphonique.

On sait que les appareils reliés aux lignes téléphoniques, ainsi qu'au secteur, sont particulièrement exposés aux effets de la foudre. Cette dernière développe par induction le long de ces lignes, des tensions très importantes qui sont ramenées sur ces installations.

Tant que les installations en question étaient essentiellement composées de postes téléphoniques passifs les dégâts étaient relativement limités et la protection relativement facile à obtenir.

Actuellement les installations téléphoniques se sont sophistiquées et compliquées, et le moindre poste téléphonique comporte un certain nombre de composants électroniques intrinsèquement fragiles aux surtensions.

Par ailleurs on utilise de plus en plus des terminaux autres que des postes téléphoniques, par exemple des appareils de télécopie, des enregistreurs, ou même des micro-ordinateurs munis d'une carte d'adaptation.

Ces appareils sont déjà sensibles aux surtensions en raison des matériels électroniques qu'ils comportent, et la situation s'aggrave au fur et à mesure que la miniaturisation et l'intégration s'accentuent.

La situation est d'autant plus grave que le dépannage est, sinon impossible, tout au moins économiquement non viable, en particulier pour les matériels grand public.

On est donc souvent amené, pour un simple orage, à jeter tout l'appareil et à le remplacer. Ceci est particulièrement fâcheux, en particulier pour l'image de marque des fabricants et de l'exploitant du réseau téléphonique.

On utilise généralement pour lutter contre ces surtensions des dispositifs non linéaires qui présentent une résistance qui est très grande aux tensions courantes d'utilisation du matériel à protéger et qui devient très faible à partir d'une tension importante mais inférieure à celle pouvant détériorer les équipements à protéger.

Pour une ligne téléphonique, il est courant de connecter entre les deux fils de la ligne une varistance qui permet d'obtenir une protection contre les défauts en mode différentiel, et de connecter entre chaque fil de cette ligne et une terre de protection des éclateurs à gaz qui permettent d'obtenir une protection contre les défauts en mode commun.

Ce type de protection nécessite d'abord que la terre existe, et surtout soit maintenue, et par ailleurs que la valeur de la résistance de cette terre soit suffisamment faible, ce qui est loin d'être toujours possible.

Dans le cas courant d'une terre présentant une impédance trop élevée, on risque de voir des défauts se propager en retour par l'intermédiaire de cette impédance, plus particulièrement lorsque le réseau électrique est touché et que les éclateurs qui protègent couramment celui-ci ramènent vers la terre un mode commun qui retourne vers la ligne téléphonique.

On remarque d'ailleurs qu'un tel défaut pourra provoquer des dégâts non seulement sur l'installation téléphonique, mais encore sur la ligne téléphonique elle-même.

On trouve dans le commerce actuellement divers dispositifs destinés à être insérés entre la ligne téléphonique et l'installation qui lui est reliée et éventuellement entre la prise électrique et le connecteur qui permet d'alimenter cette installation téléphonique en énergie électrique lorsque celle-ci est nécessaire.

Ces matériels n'amènent toutefois pas de protection supplémentaire sensible par rapport à celle qui a été décrite ci-dessus, parce que fondamentalement ils reposent sur le même principe, c'est-à-dire une combinaison de varistances et d'éclateurs, éventuellement reliés à une terre de protection.

Le document US-A-4 980 911 décrit un circuit d'élimination de signaux transitoires sur un câble à paire métallique reliant une installation téléphonique à un central téléphonique et permettant une isolation temporaire de l'installation.

Pour protéger efficacement les installations téléphoniques ainsi que les lignes auxquelles elles sont reliées, l'invention propose un dispositif de protection d'une installation téléphonique et de la ligne téléphonique qui la dessert contre la foudre, cette ligne comportant un jeu d'éclateurs reliés à une terre de protection, principalement caractérisé en ce qu'il comprend un premier jeu de contacts permettant en dehors des périodes de fonctionnement de l'installation d'isoler galvaniquement cette installation de la ligne téléphonique, et un deuxième jeu de contacts permettant simultanément d'isoler galvaniquement la ligne de la terre, et en ce qu'il comprend un circuit pilote à fort isolement reliant non galvaniquement l'installation et la ligne et comportant des moyens pour détecter un signal d'appel en provenance de la ligne ou un signal de décrochage en provenance de l'installation et pour actionner les deux jeux de contacts lors de la détection de l'un de ces signaux afin de relier galvaniquement, d'une part l'installation et la ligne, et d'autre part la ligne à la terre par l'intermédiaire des éclateurs ; ces moyens permettant d'actionner à l'inverse les jeux de contacts pour rétablir les isolements galvaniques lors de la disparition du signal de décrochage.

Selon une autre caractéristique, l'isolement du deuxième jeu de contacts présente une première valeur, l'isolement du premier jeu de contacts une deuxième valeur supérieure à la première, et l'isolement du circuit pilote une troisième valeur supérieure à la deuxième.

Selon une autre caractéristique, les trois valeurs d'isolement sont sensiblement égales à 6 kV, 8 kV et 10 kV.

Selon une autre caractéristique, ce dispositif comprend un transformateur pour assurer ladite liaison non galvanique.

Selon une autre caractéristique, ce dispositif comprend une photodiode couplée à un phototransistor pour assurer ladite liaison non galvanique

Selon une autre caractéristique, les jeux de contacts sont actionnés par un micromoteur alimenté par la ligne téléphonique.

Selon une autre caractéristique, l'installation comportant une alimentation secteur, le dispositif de protection permet de commander également la coupure de cette alimentation.

D'autres particularités et avantages de l'invention apparaîtront clairement dans la description suivante, présentée à titre d'exemple non limitatif en regard des figures annexées qui représentent :
- la figure 1, une vue schématique d'un dispositif selon l'invention relié d'un côté à une ligne téléphonique et de l'autre à une installation téléphonique ;
- la figure 2, une vue schématique d'un dispositif complémentaire destiné à protéger également l'installation et la ligne contre les défauts apparaissant sur le secteur ;
- la figure 3, une vue plus détaillée du circuit pilote de la figure 1; et
- la figure 4, un chronogramme du fonctionnement des contacts en fonction de la course du moteur.

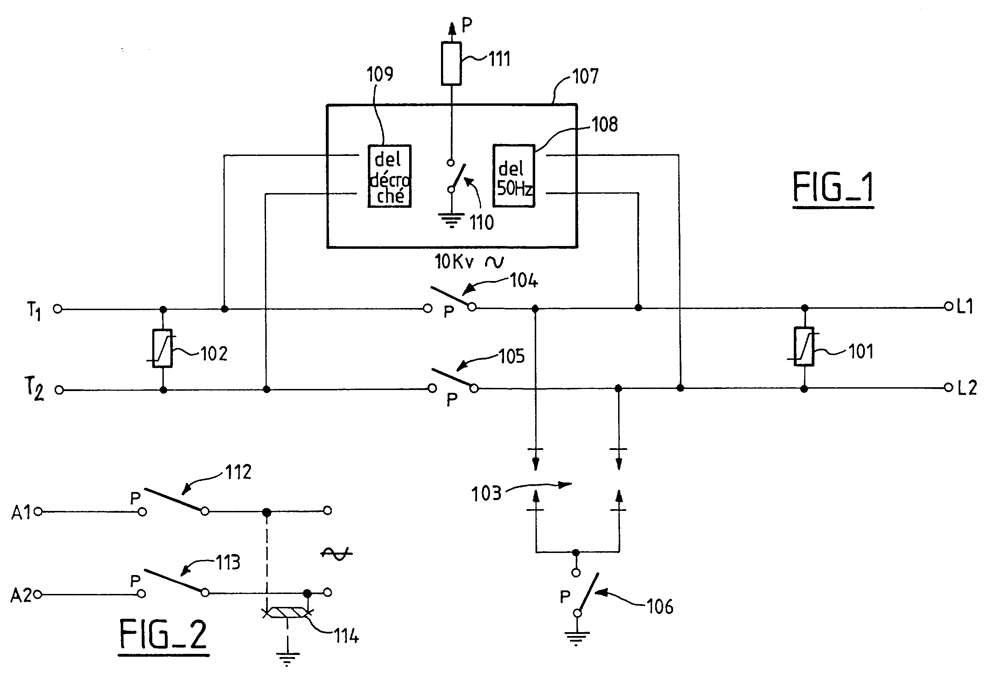

Sur la figure 1, une ligne téléphonique bifilaire comprenant deux conducteurs L1 et L2 est reliée à une installation terminale non représenté, schématisée par les connections T1 et T2.

La ligne et le terminal sont protégés d'une part par des dispositifs de protection 101 et 102, des varistances par exemple, qui viennent shunter d'un côté les deux fils de ligne et de l'autre côté les deux fils de connexion à l'installation téléphonique.

Ainsi une surtension apparaissant entre les deux fils de ligne, ou éventuellement entre les deux fils de l'installation terminale, sera absorbée par ces dispositifs qui viendront absorber les surtensions excessives en mode différentiel.

D'autre part la ligne téléphonique est munie d'un système d'au moins deux éclateurs 103 permettant de relier les deux fils de cette ligne à une terre de protection.

Ces éclateurs s'amorcent lors d'une surtension apparaissant simultanément sur les deux fils de la ligne et viennent écouler dans la terre de protection l'énergie provenant de cette surtension commune aux deux fils.

Comme on l'a décrit plus haut, il est clair que si l'impédance de cette terre de protection est trop importante, une différence de potentiel apparaissant sur celle-ci, provenant par exemple d'un amorçage sur le secteur, pourra remonter vers la ligne et vers l'installation téléphonique, en risquant de les détériorer.

Selon l'invention, le dispositif de protection comporte un jeux de deux contacts 104 et 105 qui sont insérés entre la ligne et l'installation téléphonique, respectivement sur chacun des deux fils de la ligne, de manière à pouvoir isoler l'installation et la ligne en dehors des périodes de fonctionnement de cette installation. Ces jeux de contact sont prévus pour supporter les surtensions pouvant apparaître dans la plus grande majorité des cas. La séparation entre les points conducteurs les plus rapprochés est donc d'environ 8 mm dans l'air.

Dans le mode de réalisation représenté, le dispositif de protection comprend en outre un autre jeu de contacts 106 (un seul sur la figure) qui permettent d'isoler les éclateurs 103 de la terre de protection, toujours en dehors des périodes de fonctionnement de l'installation téléphonique.

L'installation téléphonique étant ainsi déconnectée de la ligne, il faut pouvoir établir la connexion à l'aide du jeux de contacts 104/105, d'une part lorsqu'un signal d'appel arrive sur la ligne depuis l'autocommutateur éloigné auquel elle est reliée, et d'autre part lorsque l'utilisateur de l'installation souhaite s'en servir, c'est-à-dire dans le cas d'un poste téléphonique lorsqu'il décroche le combiné.

Pour cela, le dispositif de protection comprend en outre un circuit pilote 107 qui est relié d'un côté à la ligne L1/L2 et de l'autre côté à l'installation téléphonique T1/T2, mais qui est conçu pour assurer un isolement galvanique entre la ligne et l'installation. On rappelle que le terme " isolement galvanique " concerne tous les cas où la liaison directe par des circuits conducteurs est interrompue, la liaison pouvant se faire par tout autre moyen approprié, magnétique (transformateur), capacitif (condensateur), optoélectronique...

Ce circuit pilote comporte d'une part des moyens de détection 108 permettant de détecter l'arrivée sur la ligne d'un signal d'appel. Ce signal d'appel est classiquement pour les postes téléphoniques ordinaires une fréquence F1 à 50 Hz présentant une tension de 80 Volts.

Le circuit pilote comporte également un circuit 109 de détection de la mise en route de l'installation terminale. Ce circuit de détection détermine par exemple la variation d'impédance de cette installation lorsque par exemple en décrochant le combiné on vient fermer un contact.

Ces moyens de détection 108 et 109 permettent alors d'envoyer un signal de commande P aux contacts 104 à 106. Ce signal est représenté sur la figure par la fermeture d'un autre contact 110 contenu dans le circuit pilote et qui vient connecter une source d'alimentation 111, laquelle émet le signal P vers les différents contacts.

Ce signal électrique P fera fonctionner par exemple un micromoteur qui viendra fermer ces mêmes contacts par l'intermédiaire d'un jeu de cames.

Ainsi donc, en dehors des périodes de fonctionnement de l'installation téléphonique, celle-ci est isolée de la ligne téléphonique et la ligne téléphonique elle-même est isolée par rapport à la terre de protection.

Lorsque l'installation doit être mise en fonctionnement, soit par la détection d'un signal d'appel, soit par la détection d'une demande de mise en fonctionnement (décrochage) de l'installation téléphonique, le circuit pilote 107, qui détecte les signaux correspondants, vient commander la fermeture des contacts 104 et 105 qui relient l'installation téléphonique à la ligne en permettant son fonctionnement. Il commande également la fermeture du contact 106 qui vient mettre à la terre les éclateurs de protection de la ligne téléphonique, en permettant de protéger celle-ci contre les défauts en mode commun pouvant se produire lorsque l'installation téléphonique est en fonctionnement.

Lors de l'arrêt du fonctionnement de l'installation téléphonique, le circuit pilote 107 détecte cet arrêt, par des moyens décrits plus loin et qui sont confondus sur la figure avec le circuit 109, et vient commander l'ouverture des contacts 104 et 105, isolant ainsi l'installation téléphonique qui est donc protégée.

Il commande également l'ouverture du contact 106, ce qui protège la ligne téléphonique contre des défauts en retour provenant d'un amorçage sur un circuit extérieur, le secteur par exemple, et ramenés sur la ligne par l'intermédiaire de la terre de protection.

Il est bien clair que tous ces organes n'ont qu'une rigidité diélectrique limitée et qu'une surtension très importante, provenant par exemple d'un éclair très violent et/ou très rapproché, est susceptible de surmonter l'isolement présenté par ces différents organes.

Afin de limiter au mieux les dégâts provoqués par un tel amorçage, l'invention propose également de fixer délibérément une certaine hiérarchie entre les isolement des ces différents organes.

Ainsi l'organe ayant le plus faible isolement sera le contact 106, de manière à écouler prioritairement à la terre les surtensions provenant par exemple d'un foudroyage direct de la ligne téléphonique.

Dans un deuxième temps, si la surtension est encore plus forte, ce seront les contacts 104 et 105 qui amorceront à leur tour.

Enfin, le circuit pilote 107 présentera lui l'isolation maximale, pour ne pas présenter un point faible par rapport à l'isolation fournie par les contacts 104 et 105.

A titre d'exemple numérique, on pourra prévoir une isolation de 6 kV pour le contact 106, de 8 kV pour les contacts 104 et 105, et de 10 kV pour le circuit pilote.

Comme expliqué plus haut, dans le cadre d'une installation téléphonique telle par exemple qu'un télécopieur raccordé au réseau, on court également le risque en cas d'orage d'avoir un retour de surtension par la ligne d'alimentation électrique.

Dans ce cas, à titre de perfectionnement, l'invention propose d'utiliser le signal P délivré par le circuit pilote pour actionner, comme représenté sur la figure 2, un jeu de contacts 112/113 qui permettent d'isoler du réseau d'alimentation électrique la prise d'entrée secteur A1/A2 de l'installation téléphonique .

Lorsque l'alimentation électrique est munie de parafoudres basse tension 114, on placera le jeu de contacts 112, 113 de telle manière que ces parafoudres soient situés du côté secteur, et non pas du côté relié à l'installation téléphonique.

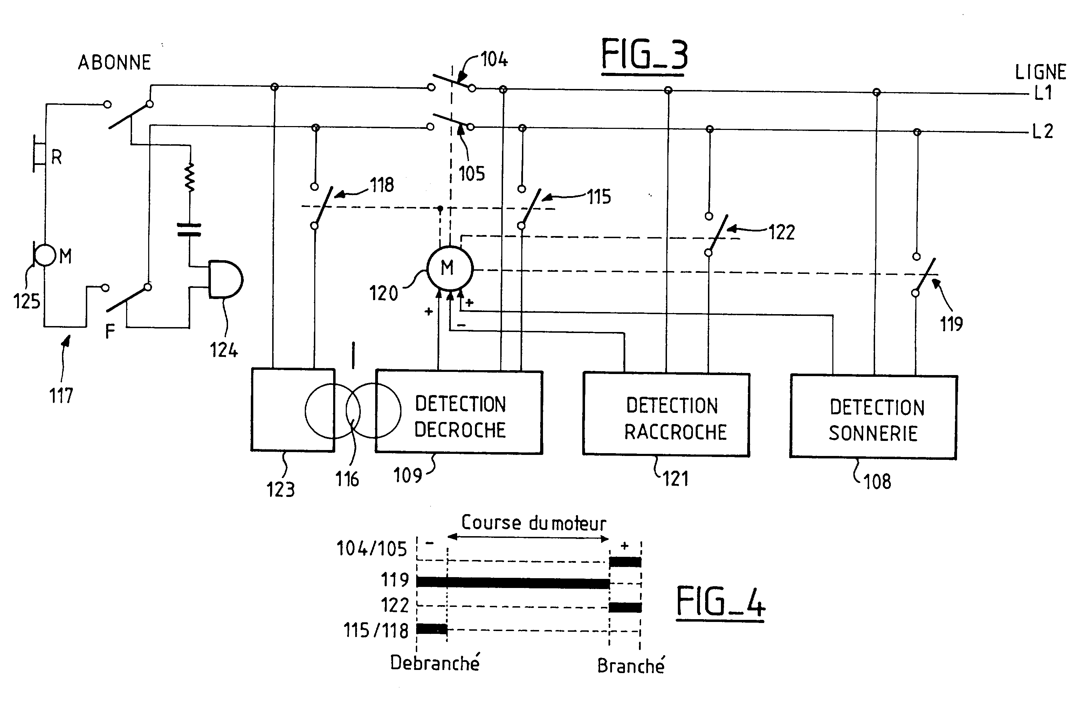

On a représenté sur la figure 3 un exemple de réalisation de l'invention, comprenant une description d'un mode de réalisation du circuit pilote 107 dans le cas où la ligne est reliée à un poste téléphonique ordinaire, et sur la figure 4 un chronogramme montrant la succession des fermetures et ouvertures des différents contacts en fonction de la course du micromoteur. Sur ce chronogramme, les gros traits noirs désignent l'état fermé des contacts.

La ligne L1/L2 est raccordée par l'intermédiaire d'un contact 115, fermé au raccroché, au circuit de détection du décroché 109. Celui-ci, qui sera décrit plus loin, comprend notamment le primaire d'un transformateur de courant 116. Le secondaire de ce transformateur, schématisé sur la figure par un bloc 123, est relié au poste téléphonique d'abonné 117 par l'intermédiaire d'un contact 118 fermé au raccroché.

On assure ainsi l'isolement galvanique entre la ligne et le poste lorsque les contacts 104/105, situés sur la liaison directe entre la ligne et le poste, sont ouverts. C'est ce transformateur qui présente l'isolement défini plus haut, soit par exemple 10 kV. Pour cela, ce transformateur utilise de préférence un tore de ferrite qui permet de bien isoler les circuits primaires et secondaires.

La ligne est aussi reliée par l'intermédiaire d'un contact 119, fermé au raccroché, au circuit de détection de sonnerie 108. Celui-ci comprend par exemple un transformateur du type à 50 Hz. dont le primaire est mis en série avec un condensateur. L'autocommutateur le voit donc comme un circuit de sonnerie classique.

Le signal d'appel (de sonnerie) transmis au secondaire de ce transformateur est donc détecté, par redressement avec seuil par exemple, et vient donc adresser un signal " + " de commande à un micromoteur 120 qui vient actionner la fermeture et/ou l'ouverture des différents contacts, selon le chronogramme de la figure 4.

Les micromoteurs disponibles dans le commerce ont une consommation suffisamment faible pour pouvoir à la rigueur être alimentés par une ligne téléphonique ordinaire au décroché en délivrant une puissance mécanique suffisamment forte pour fermer ces divers jeux de contacts. La puissance autorisée sur la ligne en mode raccroché n'est par contre pas suffisante. On alimentera donc ce micromoteur à partir de la ligne par un circuit tampon non représenté, comprenant par exemple un condensateur chargé par le faible courant pouvant être prélevé sur la ligne au raccroché. On dispose en général de tout le temps nécessaire pour que cette charge s'effectue. Le micromoteur pourrait bien sûr être alimenté par le secteur.

Comme on le voit sur le chronogramme, le circuit de détection du décroché et le transformateur d'isolement sont tout d'abord isolés par les contacts 115 et 118. Le moteur continue ensuite sa course un certain temps et vient simultanément isoler par le contact 119 le circuit 108 de détection de sonnerie, connecter par les contacts 104/105 la ligne au poste téléphonique, et connecter à cette ligne par un contact 122 un circuit de détection du raccroché 121, décrit plus loin.

La ligne étant ainsi fermée, le signal d'appel est alors appliqué au poste téléphonique dans lequel il fait fonctionner de manière connue la sonnerie 124.

Lorsque l'utilisateur décroche alors son combiné, le téléphone est alimenté en courant continu depuis la ligne par l'intermédiaire des contacts 104 et 105. L'autocommutateur situé à l'autre extrémité de cette ligne détecte le décrochage à partir de la variation de ce courant et lance les actions en conséquence.

Si l'utilisateur ne décroche pas suite à un appel, le bloc détection raccroché 121 fonctionne automatiquement de manière à remettre le système en état d'attente.

Lorsque l'utilisateur raccroche ensuite son combiné à la fin de l'utilisation du poste, il interrompt le passage du courant continu dans la ligne, ce qui provoque une variation de tension sur celle-ci. Ces variations sont détectées de manière connue par l'autocommutateur pour provoquer la rupture de la communication à son niveau.

De la même manière, le circuit de détection du raccroché 121 détecte l'une de ces variations, par un circuit à seuil par exemple, et adresse un signal " - " au moteur 120.

Celui-ci fonctionne alors dans le sens inverse par rapport à celui décrit plus haut pour la connexion du poste téléphonique et il vient actionner la fermeture et/ou l'ouverture des différents contacts, selon le chronogramme de la figure 4 pris dans le sens du " + " vers le " - ". Le poste est alors isolé galvaniquement de la ligne, à laquelle il n'est plus raccordé que par le transformateur 116.

Pour détecter le décrochage du combiné par l'utilisateur lorsque celui-ci veut appeler, alors donc que les contacts 104/105 sont ouverts, on utilise dans le circuit 109 un organe, du type monostable par exemple, qui permet d'envoyer dans le primaire du transformateur 116 des impulsions très courtes, une dizaine de microsecondes par exemple, se répétant à un rythme assez lent, 30 à 60 Hz. par exemple. La puissance pouvant être débitée sur une ligne téléphonique au repos est suffisante pour obtenir ce résultat. Ces impulsions sont appliquées au poste par le secondaire du transformateur et le courant correspondant est très faible lorsque le combiné est raccroché. Au décrochage du combiné, ce courant augmente brutalement et cette augmentation, ou la chute de tension correspondante, est détectée dans le circuit 109, par un circuit à seuil par exemple. Le circuit 109 envoie alors un signal " + " au moteur 120 et celui-ci actionne les différents contacts, comme lors de la détection du signal de sonnerie, pour connecter le poste à la ligne.

Dans le cas où l'on utilise à la place du transformateur 116 une liaison optoélectronique, on est amené à placer du côté poste, dans le bloc 123 figurant sur la figure le secondaire du transformateur, une source d'énergie électrique auxiliaire, une pile à longue durée de vie par exemple. Cette source alimente une photodiode placée dans ce bloc et reliée optiquement, avec une isolation électrique suffisante, à un phototransistor placé dans le bloc 109. Au raccroché le circuit de sonnerie ne permet pas l'alimentation de la photodiode à cause de son condensateur. Lorsque l'utilisateur décroche le combiné 125 pour appeler, la pile se met à débiter dans cette photodiode par l'intermédiaire du circuit 125 du combiné. La lumière émise vient exciter le phototransistor et la détection par le circuit 109 du signal ainsi reçu permet de commander le moteur 120. Lorsque le contact 118 s'ouvre, la pile est isolée de la photodiode et ne peut donc pas perturber le fonctionnement du poste.

On voit donc que le circuit pilote ainsi décrit permet de commander les contacts 104 et 105, et bien entendu les autres contacts nécessaires, de manière à connecter l'installation téléphonique lors d'un appel et lors d'un décrochage par l'utilisateur, et à déconnecter cette installation après le raccrochage.

## Revendications

1. Dispositif de protection d'une installation téléphonique (Tl, T2) et de la ligne téléphonique (L1, L2) qui la dessert contre la foudre, cette ligne comportant un jeu d'éclateurs (103) reliés à une terre de protection, caractérisé en ce qu'il comprend un premier jeu de contacts (104, 105) permettant en dehors des périodes de fonctionnement de l'installation d'isoler galvaniquement cette installation de la ligne téléphonique, et un deuxième jeu de contacts (106) permettant simultanément d'isoler galvaniquement la ligne de la terre, et en ce qu'il comprend un circuit pilote à fort isolement (107) reliant non galvaniquement l'installation et la ligne et comportant des moyens (108, 109) pour détecter un signal d'appel en provenance de la ligne ou un signal de décrochage en provenance de l'installation et pour actionner les deux jeux de contacts lors de la détection de l'un de ces signaux afin de relier galvaniquement, d'une part l'installation et la ligne, et d'autre part la ligne à la terre par l'intermédiaire des éclateurs ; ces moyens permettant d'actionner à l'inverse les jeux de contacts pour rétablir les isolements galvaniques lors de la disparition du signal de décrochage.

2. Dispositif selon la revendication 1, caractérisé en ce que l'isolement du deuxième jeu de contacts (106) présente une première valeur, l'isolement du premier jeu de contacts (104, 105) une deuxième valeur supérieure à la première, et l'isolement du circuit pilote (107) une troisième valeur supérieure à la deuxième.

3. Dispositif selon la revendication 2, caractérisé en ce que les trois valeurs d'isolement sont sensiblement égales à 6 kV, 8 kV et 10 kV.

4. Dispositif selon l'une quelconque des revendications 1 à 3, caractérisé en ce qu'il comprend un transformateur (116) pour assurer ladite liaison non galvanique.

5. Dispositif selon l'une quelconque des revendications 1 à 3, caractérisé en ce qu'il comprend une photodiode couplée à un phototransistor pour assurer ladite liaison non galvanique.

6. Dispositif selon l'une quelconque des revendications 1 à 5, caractérisé en ce que les jeux de contacts (104-106) sont actionnés par un micromoteur (120) alimenté par la ligne téléphonique.

7. Dispositif selon l'une quelconque des revendications 1 à 5, caractérisé en ce que les jeux de contacts (104-106) sont actionnés par un micromoteur (120) alimenté par le secteur.

8. Dispositif selon l'une quelconque des revendications 1 à 7, caractérisé en ce que, l'installation comportant une alimentation secteur, le dispositif de protection permet de commander également la coupure (112, 113) de cette alimentation.

## Patentansprüche

1. Überspannungs- bzw. Blitzschutzvorrichtung für eine Fernsprecheinrichtung (T1, T2) und die Telephonleitung (L1, L2), an die sie angeschlossen ist, wobei diese Leitung einen Satz Überspannungsableiter (103) umfaßt, die mit einer Schutzerde verbunden sind,
**dadurch gekennzeichnet**,
daß sie einen ersten Satz von Kontakten (104, 105) umfaßt, die außerhalb der Betriebsperioden der Anlage ermöglichen, diese Anlage galvanisch von der Telephonleitung zu trennen, und einen zweiten Satz von Kontakten (106), die ermöglichen, simultan die Leitung galvanisch von der Erde zu trennen, und dadurch, daß sie eine Steuerstromkreis mit starker Isolierung (107) umfaßt, der die Anlage und die Leitung auf nicht-galvanische Weise verbindet, und Einrichtungen (108, 109) umfaßt, um ein von der Leitung kommendes Anrufsignal oder ein von der Anlage kommendes Abhebsignal zu detektieren und um bei der Detektion eines dieser Signale die beiden Kontaktsätze zu betätigen, um die galvanische Verbindung zwischen einerseits der Anlage und der Leitung und andererseits der Leitung und der Erde über die Überspannungsableiter wiederherzustellen; wobei diese Einrichtungen ermöglichen, die Kontaktsätze umgekehrt zu betätigen, um die galvanischen Trennungen nach dem Verschwinden des Abhebsignals wiederherzustellen.

2. Vorrichtung nach Anspruch 1, dadurch gekennzeichnet, daß die Isolation des zweiten Kontaksatzes (106) einen ersten Wert darstellt, die Isolation des ersten Kontaktsatzens (104, 105) einen zweiten Wert darstellt, höher als der erste, und die Isolation des Steuerstromkreises (107) einen dritten Wert darstellt, höher als der zweite.

3. Vorrichtung nach Anspruch 2, dadurch gekennzeichnet, daß die drei Isolationswerte im wesentlichen gleich 6kV, 8kV und 10kV sind.

4. Vorrichtung nach einem der Ansprüche 1 bis 3, dadurch gekennzeichnet, daß sie einen Transformator (116) umfaßt, um die genannte nicht-galvanische Verbindung herzustellen.

5. Vorrichtung nach einem der Ansprüche 1 bis 3, dadurch gekennzeichnet, daß sie eine mit einem Phototransistor gekoppelte Photodiode umfaßt, um die genannte nicht-galvanische Verbindung herzustellen.

6. Vorrichtung nach einem der Ansprüche 1 bis 5, dadurch gekennzeichnet, daß die Kontaktsätze (104-106) durch einen über die Telephonleitung gespeisten Mikromotor (120) betätigt werden.

7. Vorrichtung nach einem der Ansprüche 1 bis 5, dadurch gekennzeichnet, daß die Kontaktsätze (104-106) durch einen aus dem Stromnetz gespeisten Motor (120) betätigt werden.

8. Vorrichtung nach einem der Ansprüche 1 bis 7, dadurch gekennzeichnet, daß die Anlage eine Stromnetz-Versorgung umfaßt, wobei die Schutzvorrichtung ebenfalls die Unterbrechung (112, 113) dieser Versorgung ermöglicht.

## Claims

1. A device for protecting a telephone installation (T1, T2) and the telephone line (L1, L2) serving it against lightning, this line having a set of lightning arresters (103) connected to a protective ground, characterised in that it has a first set of contacts (104, 105) enabling the installation to be galvanically isolated from the telephone line during periods when this telephone installation is not in operation and a second set of contacts (106) enabling the line to be simultaneously galvanically isolated from the ground and in that it has a high isolation control circuit (107) non-galvanically connecting the installation and the line and having means (108, 109) for detecting a call signal from the line or an unhooking signal from the installation and activating the two sets of contacts when one of these signals is detected in order to connect galvanically the installation and the line on the one hand and the line to the earth via the arresters on the other; these means allowing the sets of contacts to be activated in reverse to restore the galvanic isolations when the unhooking signal disappears.

2. A device as claimed in claim 1, characterised in that the isolation of the second set of contacts (106) has a first value, the isolation of the first set of contacts (104, 105) a second value greater than the first and the isolation of the control circuit (107) a third value greater than the second.

3. A device as claimed in claim 2, characterised in that the three isolation values are substantially equal to 6 kV, 8 kV and 10 kV.

4. A device as claimed in any one of claims 1 to 3, characterised in that it has a transformer (116) to provide said non-galvanic connection.

5. A device as claimed in any one of claims 1 to 3, characterised in that it has a photodiode coupled with a photo-transistor to provide said non-galvanic connection.

6. A device as claimed in any one of claims 1 to 5, characterised in that the sets of contacts (104-106) are activated by a micro-motor (120) powered by the telephone line.

7. A device as claimed in any one of claims 1 to 5, characterised in that the sets of contacts (104-106) are activated by a micro-motor (120) supplied by the power grid.

8. A device as claimed in any one of claims 1 to 7, characterised in that the installation has a power grid supply, the protective device also being capable of controlling the disconnection (112, 113) of this supply.
